(19) Europäisches Patentamt
European Patent Office
Office européen des brevets

(11) EP 4 134 401 A1

(12) **EUROPEAN PATENT APPLICATION**
published in accordance with Art. 153(4) EPC

(43) Date of publication:
**15.02.2023 Bulletin 2023/07**

(21) Application number: **21785010.6**

(22) Date of filing: **08.04.2021**

(51) International Patent Classification (IPC):
***C08L 77/00*** *(1974.07)* ***C08K 3/013*** *(2018.01)*
***C08K 5/5313*** *(1990.01)* ***C08K 7/14*** *(1974.07)*
***C08L 77/06*** *(1974.07)*

(52) Cooperative Patent Classification (CPC):
**C08K 3/013; C08K 5/5313; C08K 7/14;
C08L 77/00; C08L 77/06**

(86) International application number:
**PCT/JP2021/014922**

(87) International publication number:
**WO 2021/206146 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.04.2020 JP 2020070539**

(71) Applicant: **Kuraray Co., Ltd.**
**Kurashiki-shi, Okayama 710-0801 (JP)**

(72) Inventors:
- **SUGAI, Naoto**
**Tsukuba-shi, Ibaraki 305-0841 (JP)**
- **SHIGEMATSU, Takaharu**
**Tsukuba-shi, Ibaraki 305-0841 (JP)**

(74) Representative: **Müller-Boré & Partner Patentanwälte PartG mbB**
**Friedenheimer Brücke 21**
**80639 München (DE)**

# (54) COLORED POLYAMIDE RESIN COMPOSITION AND MOLDED BODY THEREOF

(57) A polyamide resin composition containing, per 100 parts by mass of a particular polyamide (A), 45 to 120 parts by mass of an inorganic filler (B), 25 to 40 parts of at least one kind of a phosphinate salt (C) represented by the particular formula, 2 to 15 parts by mass of a phosphite salt (D), and a colorant (E), having a sulfur element content of less than 220 ppm by mass and ΔE represented by the following expression (1) of more than 1, and a molded body thereof

$$\Delta E = [(L^*_{col}-L^*_{nat})^2+(a^*_{col}-a^*_{nat})^2+(b^*_{col}-b^*_{nat})^2]^{1/2} \qquad (1)$$

wherein the symbols in the expression are defined in the description.

EP 4 134 401 A1

## Description

### Technical Field

The present invention relates to a colored polyamide resin composition and a molded body thereof, and more specifically, relates to a colored halogen-free polyamide resin composition that provides a molded body having excellent flame retardancy, and a molded body thereof.

### Background Art

A polyamide has been frequently used in the field of automobile components and the field of electric and electronic components due to the excellent mechanical characteristics and the excellent heat resistance thereof. In the field of electric and electronic components, a surface mount process with a high mounting efficiency of components has become widespread, and a heat-resistant polyamide having high heat resistance excellent in strength has become widespread as a material favorable for forming the components. In recent years, lead-free solder has been employed as solder used in the surface mount process from the standpoint of the reduction of the environmental load, and since lead-free solder has a relatively high melting point, the temperature in the reflow process in the surface mount process is necessarily set to a high temperature of approximately 260°C. Accordingly, the heat-resistant polyamide used for forming components for the surface mount process is one having a relatively high melting point in the heat-resistant polyamide.

In the field of electric and electronic components, flame retardancy is frequently demanded for the components, and it is frequently required to achieve the evaluation V-0 in the UL94 Standard of Underwriters Laboratories. As a heat-resistant polyamide for forming electric and electronic components, materials having a bromine-based flame retardant mixed therein have been generally used. However, the use of some raw materials containing harmful materials, such as lead and cadmium, is being restricted in accordance with the increased awareness of the environment. There is a tendency that the use of compounds containing a halogen, such as the bromine-based flame retardant, is avoided irrespective of the evaluation results thereof including the safety and the substantial environmental load, and there is an increasing demand for a frame retardant polyamide containing no halogen.

Some flame retardants containing no halogen for a polyamide have been known. However, the flame retardant that is mixed in the heat-resistant polyamide having a high melting point is demanded to have high heat resistance capable of withstanding the high temperatures in melt-kneading in the production of a polyamide resin composition and in the production of a molded body thereof, in addition to the high flame retardancy, and in particular, this tendency is conspicuous in the electric and electronic components to be subjected to the reflow process in the surface mount process.

As a flame retardant having high-level flame retardancy and heat resistance containing no halogen, a phosphinate salt has been known. For example, a resin composition containing a particular semi-aromatic polyamide, a polyphenylene ether, and a phosphinate salt has been known (see, for example, PTLs 1 and 2).

### Citation List

#### Patent Literatures

PTL 1: JP 2007-182550 A
PTL 2: JP 2007-182551 A
PTL 3: JP 2015-120891 A
PTL 4: JP 2010-120983 A
PTL 5: JP 2014-521765 A
PTL 6: JP 2016-186080 A

### Summary of Invention

#### Technical Problem

A polyamide resin composition containing a phosphinate salt is used after coloration for the purpose of automobile components and the purpose of electric and electronic components. However, there is a problem that a molded body using the polyamide resin composition that contains a phosphinate salt and is colored to provide excellent visibility has deteriorated flame retardancy in some cases. For example, as for a test specimen having a thickness of 0.15 to 3.0

mm, a test specimen using a polyamide resin composition containing a phosphinate salt but no colorant passes the UL94 V-0 standard, but a test specimen using a polyamide resin composition containing a phosphinate salt and a colorant fails to pass the UL94 V-0 standard in some cases.

PTL 3 describes a flame retardant thermoplastic resin composition containing a polyphenylene ether, a phosphinate metal salt, and a colorant. However, PTL 3 fails to refer to the influence of the colorant on the flame retardancy.

PTL 4 describes a polyamide resin composition containing a phosphinate metal salt, particular rubber, melamine polyphosphate as a flame retardant, and a white pigment. The polyamide resin composition contains melamine polyphosphate inferior in heat resistance, and thus the polyamide resin composition is difficult to use as a resin composition for a reflow process. PTL 4 also fails to refer to the influence of the colorant on the flame retardancy.

PTLs 5 and 6 describe a flame retardant polyamide resin composition excellent in appearance containing a particular polyamide, a phosphinate metal salt, and a flame retardant containing a colorant. However, PTLs 5 and 6 fail to refer to the influence of the colorant on the flame retardancy.

Under the circumstances, an object of the present invention is to provide a halogen-free polyamide resin composition that can withstand a reflow process, and in addition, is excellent in flame retardancy and excellent in visibility, and a molded body thereof.

Solution to Problem

As a result of the earnest investigations for achieving the object, the present inventors have reached the present invention by which the object can be achieved.

The present invention is as follows.

[1] A polyamide resin composition containing, per 100 parts by mass of a polyamide (A) having a melting point of 280°C or more, 45 to 120 parts by mass of an inorganic filler (B), 25 to 40 parts of at least one kind of a phosphinate salt (C) represented by the following formula (I) or the following formula (II), 2 to 15 parts by mass of a phosphite salt (D), and a colorant (E), having a sulfur element content of less than 220 ppm by mass and $\Delta E$ represented by the following expression (1) of more than 1:

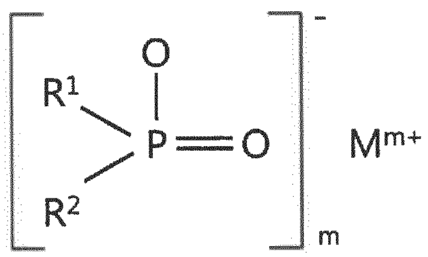

(I)

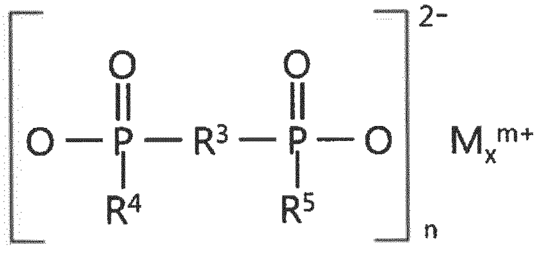

(II)

wherein in the formula (I) and the formula (II), $R^1$, $R^2$, $R^4$, and $R^5$ each independently represent a linear or branched alkyl group having 1 to 16 carbon atoms, in which $R^1$ and $R^2$, and $R^4$ and $R^5$ each may be bonded to each other to form a ring; $R^3$ represents a linear or branched alkylene group having 1 to 10 carbon atoms, an arylene group having 6 to 10 carbon atoms, an alkylarylene group having 7 to 20 carbon atoms, a cycloalkylene group having 3 to 10 carbon atoms, an aralkylene group having 7 to 10 carbon atoms, or an arylalkylene group having 7 to 20 carbon atoms; M represents calcium, magnesium, aluminum, or zinc; m represents an integer of 1 to 4; n represents an integer of 1 to 4; and x represents an integer of 1 to 4, provided that in the formula (II), m, x, and n satisfy a relational expression mx = 2n,

$$\Delta E = [(L^*_{col} - L^*_{nat})^2 + (a^*_{col} - a^*_{nat})^2 + (b^*_{col} - b^*_{nat})^2]^{1/2} \quad (1)$$

wherein in the expression (1), ΔE represents a color difference defined by the CIE 1976 (L*a*b*) color system; $L^*_{col}$, $a^*_{col}$, and $b^*_{col}$ represent L*, a*, and b* defined by the CIE 1976 (L*a*b*) color system of the polyamide resin composition, respectively; and $L^*_{nat}$, $a^*_{nat}$, and $b^*_{nat}$ represent L*, a*, and b* defined by the CIE 1976 (L*a*b*) color system of a colorant-free polyamide resin composition having the same composition as the polyamide resin composition except that the colorant (E) is not contained, respectively.

[2] A molded body including the polyamide resin composition according to the item [1].

Advantageous Effects of Invention

According to the present invention, a halogen-free polyamide resin composition that can withstand a reflow process, and in addition, is excellent in flame retardancy and excellent in visibility, and a molded body thereof can be provided.

Description of Embodiments

An explanation will be made below based on examples of an embodiment of the present invention (which may be hereinafter referred to as a "present embodiment"). However, the embodiment shown below is for practicing the technical concept of the present invention, and the present invention is not limited to the following description.

In the description herein, preferred embodiments of the embodiment will be shown, and any combination of two or more of the individual preferred embodiments is also a preferred embodiment. In the case where plural numeral ranges are described for an item shown by a numeral range, any of the lower limit values and the upper limit values may be selectively combined to make a preferred embodiment.

In the description herein, a numeral range shown by "XX to YY" means "XX or more and YY or less".

<Polyamide Resin Composition>

The polyamide resin composition of the present embodiment contains, per 100 parts by mass of the particular polyamide (A), 45 to 120 parts by mass of an inorganic filler (B), 25 to 40 parts of at least one kind of a phosphinate salt (C) represented by the particular formula, 2 to 15 parts by mass of a phosphite salt (D), and a colorant (E), and has a sulfur element content of less than 220 ppm by mass and ΔE represented by the following expression (1) of more than 1.

$$\Delta E = [(L^*_{col}-L^*_{nat})^2+(a^*_{col}-a^*_{nat})^2+(b^*_{col}-b^*_{nat})^2]^{1/2} \qquad (1)$$

In the expression (1), ΔE represents a color difference defined by the CIE 1976 (L*a*b*) color system; $L^*_{col}$, $a^*_{col}$, and $b^*_{col}$ represent L*, a*, and b* defined by the CIE 1976 (L*a*b*) color system of the polyamide resin composition, respectively; and $L^*_{nat}$, $a^*_{nat}$, and $b^*_{nat}$ represent L*, a*, and b* defined by the CIE 1976 (L*a*b*) color system of a colorant-free polyamide resin composition having the same composition as the polyamide resin composition except that the colorant (E) is not contained, respectively.

The polyamide resin composition is a halogen-free polyamide resin composition that can withstand a reflow process, and in addition, is excellent in flame retardancy and excellent in visibility.

The mechanism of the exhibition of excellent flame retardancy even by a molded body of the polyamide resin composition that contains a phosphinate salt and is colored to provide excellent visibility is not necessarily clear, but can be considered as follows.

The major flame retarding mechanism of a phosphinate salt is the formation of a carbonized layer formed with polyphosphoric acid formed through decomposition of the phosphinate salt in burning, and the carbonized layer suppresses thermal conduction and inhibits thermal decomposition of the resin and burning thereof caused thereby. In the present invention, it is considered that not only the phosphinate salt, but also the phosphite salt contained in the polyamide resin composition of the present embodiment contribute to the enhancement of the flame retardancy. Specifically, it is considered that the phosphite salt is decomposed and foamed in burning to form a thermal insulating layer, and the thermal insulating layer suppresses thermal conduction and inhibits thermal decomposition of the resin and burning thereof caused thereby.

As for the colorant, a sulfur element has been widely used for regulating the coloration by modifying the electron state as an organic colorant, or in the form of sulfide as an inorganic colorant. Furthermore, there are cases where a sulfur element is mixed in as an impurity in the production of the colorant. Moreover, in addition to the colorant, there are cases where a sulfur element is contained in a catalyst used in the synthesis process of a polyamide resin, or in other additives and the like.

In consideration of the above, in the case where a sulfur element exists in a polyamide resin composition containing a phosphinate salt and a phosphite salt, it is considered that a sulfur radical is generated in burning, and the sulfur radical deactivates the polyphosphoric acid and the phosphorous acid. In this case, it is considered that in the case where the amount of a sulfur element is increased, the carbonized layer and the thermal insulating layer cannot be sufficiently formed, resulting in deterioration of the flame retardancy.
Therefore, it is considered that a molded body excellent in flame retardancy can be obtained by regulating the content of a sulfur element to a particular value, even with a polyamide resin composition containing a phosphinate salt and a colorant.

[Polyamide (A)]

The polyamide (A) has a melting point of 280°C or more.
The melting point of the polyamide (A) is preferably 285°C or more, and more preferably 295°C or more. In the case where the melting point of the polyamide (A) is the aforementioned temperature or more, the molded body of the polyamide resin composition containing the polyamide (A) can retain sufficient heat resistance even in use in an application exposed to a heat treatment, such as a reflow process.
It is preferred that the polyamide (A) contains a diamine unit, and 50 to 100% by mol of the diamine unit is an aliphatic diamine unit having 4 to 18 carbon atoms.
It is preferred that the polyamide (A) contains a dicarboxylic acid unit and a diamine unit, a major component of the dicarboxylic acid unit is a unit derived from terephthalic acid, and a major component of the diamine unit is at least one kind selected from an aliphatic diamine having 4 to 12 carbon atoms. The polyamide frequently has a sufficiently high melting point, and the use thereof can provide the polyamide resin composition capable of providing a molded body withstanding a reflow process.
The "major component" herein means that other components may be contained in such a range that does not impair the effects of the present invention. The "major component of the dicarboxylic acid unit" means that the component preferably constitutes 50 to 100% by mol, more preferably 60 to 100% by mol, and further preferably 90 to 100% by mol, of the total dicarboxylic acid unit. The "major component of the diamine unit" means that the component preferably constitutes 50 to 100% by mol, more preferably 60 to 100% by mol, and further preferably 90 to 100% by mol, of the total diamine unit.
Examples of the dicarboxylic acid unit other than the unit derived from terephthalic acid include constitutional units derived from an aliphatic dicarboxylic acid, such as oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid; an alicyclic dicarboxylic acid, such as 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid; and an aromatic dicarboxylic acid, such as isophthalic acid, 1,4-naphthalenedicarboxylic acid, 2,6-naphthalenedicarboxylic acid, 2,7-naphthalenedicarboxylic acid, diphenic acid, 4,4'-biphenyldicarboxylic acid, diphenylmethane-4,4'-dicarboxylic acid, and diphenylsulfone-4,4'-dicarboxylic acid. One kind of these units or two or more kinds thereof may be used.
The polyamide may contain a constitutional unit derived from a tribasic of higher polybasic carboxylic acid, such as trimellitic acid, trimesic acid, and pyromellitic acid, in such a range that enables melt molding and in such a range that does not impair the effects of the present invention.
Examples of the aliphatic diamine unit having 4 to 18 carbon atoms include constitutional units derived from a linear aliphatic diamine, such as 1,4-butanediamine, 1,5-pentanediamine, 1,6-hexanediamine, 1,7-heptanediamine, 1,8-octane diamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, and 1,18-octadecanediamine; and a branched aliphatic diamine, such as 1-butyl-1,2-ethanediamine, 1,1-dimethyl-1,4-butanediamine, 1-ethyle-1,4-butanediamine, 1,2-dimethyl-1,4-butanedimaine, 1,3-dimethyl-1,4-butanediamine, 1,4-dimethyl-1,4-butanediamine, 2,3-dimethyl-1,4-butanediamine, 2-methyl-1,5-pentanediamine, 3-methyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2,4-diethyl-1,6-hexanediamine, 2,2-dimethyl-1,7-heptanediamine, 2,3-dimethyl-1,7-heptanediamine, 2,4-dimethyl-1,7-heptanediamine, 2,5-dimethyl-1,7-heptanediamine, 2-methyl-1,8-octanediamine, 3-methyl-1,8-octanediamine, 4-methyl-1,8-octane diamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, and 5-methyl-1,9-nonanediamine.
Among these, from the standpoint of the heat resistance capable of withstanding the reflow process and the flame retardancy of the molded body of the polyamide resin composition, constitutional units derived from at least two kinds selected from 1,8-octanediamine, 2-methyl-1,8-octanediamine, 1,9-nonanediamine, 1,10-decanediamine, 1,11-undecanediamine, and 1,12-dodecanediamine are preferred, and constitutional units derived from at least two kinds selected from 1,9-nonanediamine, 2-methyl-1,8-octanediamine, and 1,10-decanediamine are more preferred.

In particular, from the standpoint of the heat resistance capable of withstanding the reflow process and the flame retardancy of the molded body of the polyamide resin composition, it is preferred that the diamine unit contains a unit derived from an aliphatic diamine having 9 carbon atoms, it is more preferred that the major component of the diamine unit is at least two kinds selected from an aliphatic diamine having 9 carbon atoms, and it is further preferred that the diamine unit contains a constitutional unit derived from 1,9-nonanediamine and a constitutional unit derived from 2-methyl-1,8-octanediamine in an amount of 60 to 100% by mol.

In the case where the diamine unit contains a constitutional unit derived from 1,9-nonanediamine and a constitutional unit derived from 2-methyl-1,8-octanediamine in an amount of 60 to 100% by mol, the molar ratio of the constitutional unit derived from 1,9-nonanediamine and the constitutional unit derived from 2-methyl-1,8-octanediamine is preferably in a range of (constitutional unit derived from 1,9-nonanediamine)/(constitutional unit derived from 2-methyl-1,8-octanediamine) = 30/70 to 95/5, more preferably in a range of 50/50 to 90/10, and further preferably in a range of 70/30 to 90/10. In the case where the molar ratio is in the range, the melting point of the polyamide (A) can be prevented from becoming too low, which is favorable for regulating to a temperature capable of withstanding the reflow process.

The diamine unit in the polyamide (A) may contain a diamine unit other than an aliphatic diamine unit having 4 to 18 carbon atoms in such a range that does not impair the effects of the present invention. Examples of the diamine unit include constitutional units derived from an aliphatic diamine, such as ethylenediamine, 1,2-propanediamine, and 1,3-propanediamine; an alicyclic diamine, such as cyclohexanediamine, methylcyclohexanediamine, isophoronediamine, norbornanediamine; and tricyclodecanedimethyldiamine; and an aromatic diamine, such as p-phenylenediamine, m-phenylenediamine, p-xylylenediamine, m-xylylenediamine, 4,4'-diaminodiphenylmethane, 4,4'-diaminodiphenylsulfone, and 4,4'-diaminodiphenyl ether. One kind of these units or two or more kinds thereof may be used.

The polyamide (A) may contain an aminocarboxylic acid unit. Examples of the aminocarboxylic acid unit include units derived from a lactam, such as caprolactam and lauryllactam, and an aminocarboxylic acid, such 11-aminoundecanoic acid and 12-aminododecanoic acid. The content of the aminocarboxylic acid unit in the polyamide is preferably 40% by mol or less, and more preferably 20% by mol or less, based on 100% by mol in total of the dicarboxylic acid unit and the diamine unit of the polyamide.

The polyamide (A) may contain a unit derived from an end-capping agent. The unit derived from an end-capping agent is preferably 1.0 to 10% by mol, more preferably 2.0 to 7.5% by mol, and further preferably 2.5 to 6.5% by mol, based on the diamine unit.

The unit derived from an end-capping agent within the range can be achieved by charging an end-capping agent to make the aforementioned intended range with respect to the diamine in charging the polymerization raw materials. In consideration of evaporation of the monomer components in polymerization, the amount of the end-capping agent charged in charging the polymerization raw materials is preferably finely regulated to introduce the desired amount of the unit derived from the end-capping agent to the resulting resin.

Examples of the method of obtaining the content of the unit derived from the end-capping agent in the polyamide (A) include a method of measuring the solution viscosity, and calculating the total end group amount according to the relational expression between the solution viscosity and the number average molecular weight, from which the amino group amount and the carboxyl group amount obtained by titration are subtracted, as described in JP 07-228690 A, and a method of obtaining the content thereof based on the integrated values of the signals corresponding to the diamine unit and the unit derived from the end-capping agent in $^1$H-NMR.

The end-capping agent used may be a monofunctional compound having reactivity with the end amino group or the end carboxyl group. Specific examples thereof include a monocarboxylic acid, an acid anhydride, a monoisocyanate, a monoacid halide, a monoester compound, a monoalcohol compound, and a monoamine compound. From the standpoint of the reactivity and the stability of the capped end, the end-capping agent for the end amino group is preferably a monocarboxylic acid, and the end-capping agent for the end carboxyl group is preferably a monoamine. The end-capping agent is more preferably a monocarboxylic acid from the standpoint of the easiness in handling.

The monocarboxylic acid used as the end-capping agent is not particularly limited, as far as reactivity with an amino group is exhibited thereby, and examples thereof include an aliphatic monocarboxylic acid, such as acetic acid, propionic acid, butyric acid, valeric acid, caproic acid, caprylic acid, lauric acid, tridecanoic acid, myristic acid, palmitic acid, stearic acid, pivalic acid, and isobutyric acid; an alicyclic monocarboxylic acid, such as cyclopentanecarboxylic acid and cyclohexanecarboxylic acid; an aromatic monocarboxylic acid, such as benzoic acid, toluic acid, $\alpha$-naphthalenecarboxylic acid, $\beta$-naphthalenecarboxylic acid, methylnaphthalenecarboxylic acid, and phenylacetic acid; and arbitrary mixtures thereof. Among these, at least one kind selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferred from the standpoint of the reactivity, the stability of the capped end, the cost, and the like.

The monoamine used as the end-capping agent is not particularly limited, as far as reactivity with a carboxyl group is exhibited thereby, and examples thereof include an aliphatic monoamine, such as methylamine, ethylamine,

propylamine, butylamine, hexylamine, octylamine, decylamine, stearylamine, dimethylamine, diethylamine, dipropylamine, and dibutylamine; an alicyclic monoamine, such as cyclohexylamine and dicyclohexylamine; an aromatic monoamine, such as aniline, toluidine, diphenylamine, and naphthylamine; and arbitrary mixtures thereof. Among these, at least one kind selected from the group consisting of butylamine, hexylamine, octylamine, decylamine, stearylamine, cyclohexylamine, and aniline is preferred from the standpoint of the reactivity, the high boiling point, the stability of the capped end, the cost, and the like.

The polyamide (A) may be produced by an arbitrary method that has been known as a method for producing a polyamide. Examples of the method of producing the same include a solution polymerization method or an interface polymerization method using an acid chloride and a diamine as raw materials, and a polymerization method, such as a melt polymerization method, a solid phase polymerization method, and a melt extrusion polymerization method, using a dicarboxylic acid and a diamine as raw materials.

The polyamide (A) may be produced in such a manner that a diamine, a dicarboxylic acid, and depending on necessity a catalyst and an end-capping agent are charged at one time to produce a nylon salt, which is then polymerized under heating at a temperature of 200 to 250°C to provide a prepolymer, which is further subjected to solid phase polymerization or polymerized with a melt extruder. In the case where the final stage of the polymerization is performed by solid phase polymerization, the solid phase polymerization is preferably performed under reduced pressure or under an inert gas stream, and with a polymerization temperature in a range of 200 to 280°C, a large polymerization rate, excellent productivity, and effective suppression of coloration and gelation can be obtained. In the case where the final stage of the polymerization is performed with a melt extruder, the polymerization temperature is preferably 370°C or less, and the polymerization under that condition can provide a polyamide with substantially no decomposition and less deterioration.

Examples of the catalyst that can be used in the production of the polyamide (A) include phosphoric acid, phosphorous acid, hypophosphorous acid, and salts or esters thereof. Examples of the salts and the esters include a salt of phosphoric acid, phosphorous acid, or hypophosphorous acid with a metal, such as potassium, sodium, magnesium, vanadium, calcium, zinc, cobalt, manganese, tin, tungsten, germanium, titanium, and antimony; an ammonium salt of phosphoric acid, phosphorous acid, or hypophosphorous acid; and an ethyl ester, an isopropyl ester, a butyl ester, a hexyl ester, an isodecyl ester, an octadecyl ester, a decyl ester, a stearyl ester, a phenyl ester, or the like of phosphoric acid, phosphorous acid, or hypophosphorous acid.

The polyamide (A) may contain any of a crystalline polyamide, an amorphous polyamide, and a mixture thereof in such a range that does not impair the effects of the present invention.

Examples of the crystalline polyamide include polycaproamide (polyamide 6), polyhexamethylene adipamide (polyamide 66), polytetramethylene adipamide (polyamide 46), polyhexamethylene sebacamide (polyamide 610), polyhexamethylene dodecamide (polyamide 612), polyundecamethylene adipamide (polyamide 116), polybis(4-aminocyclohexyl)methane dodecamide (polyamide PACM12), polybis(3-methyl-4-aminocyclohexyl)methane dodecamide (polyamide dimethyl PACM12), polyundecamethylene terephthalamide (polyamide 11T), polyundecamethylene hexahydroterephthalamide (polyamide 11T(H)), polyundecaneamide (polyamide 11), polydodecamide (polyamide 12), polytrimethylhexamethylene terephthalamide (polyamide TMDT), polymxylylene adipamide (polyamide MXD6), polyhexamethylene terephthalamide (polyamide 6T), polyhexamethylene isophthalamide (polyamide 6I), a copolymer of polyamide 6I and polyamide 6T (polyamide 6I/6T), a copolymer of polyamide 6T and polyundecaneamide (polyamide 11) (polyamide 6T/11), and copolymers and mixtures thereof. The crystalline polyamide encompasses a compound having a benzene ring of terephthalic acid and/or isophthalic acid substituted by an alkyl group or a halogen atom. One kind of the crystalline polyamide may be used alone, or multiple kinds thereof may be used in combination.

Examples of the amorphous polyamide include a polycondensate of terephthalic acid, isophthalic acid, and 1,6-hexanediamine, a polycondensate of terephthalic acid, isophthalic acid, 1,6-hexanediamine, and bis(3-methyl-4-aminocyclohexyl)methane, a polycondensate of terephthalic acid, 2,2,4-trimethyl-1,6-hexanediamine, and 2,4,4-trimethyl-1,6-hexanediamine, a polycondensate of isophthalic acid, bis(3-methyl-4-aminocyclohexyl)methane, and ω-laurolactam, a polycondensate of isophthalic acid, 2,2,4-trimethyl-1,6-hexanediamine, and 2,4,4-trimethyl-1,6-hexanediamine, and a polycondensate of terephthalic acid, isophthalic acid, 2,2,4-trimethyl-1,6-hexanediamine, and 2,4,4-trimethyl-1,6-hexanediamine. The amorphous polyamide encompasses a compound having a benzene ring of terephthalic acid and/or isophthalic acid substituted by an alkyl group or a halogen atom. One kind of the amorphous polyamide may be used alone, or multiple kinds thereof may be used in combination.

[Inorganic Filler (B)]

Examples of the inorganic filler (B) include carbon nanotubes, fullerene, talc, wollastonite, zeolite, sericite, mica, kaolinite, clay, pyrophyllite, silica, bentonite, aluminosilicate, silicon oxide, magnesium oxide, alumina, magnesium carbonate, dolomite, calcium sulfate, calcium hydroxide, magnesium hydroxide, aluminum hydroxide, milled fibers, glass powder, ceramic beads, boron nitride, silicon carbide, various clay minerals, such as halloysite and vermiculite, and

glass fibers. One kind of the inorganic filler may be used alone, or two or more kinds thereof may be used in combination.

The inorganic filler (B) is preferably at least one kind selected from glass fibers having a circular cross-section and glass fibers having a non-circular cross-section (which may be hereinafter referred simply to as glass fibers) from the standpoint of the molding workability of the polyamide resin composition and the mechanical strength of the molded body of the polyamide resin composition.

Examples of the cross-sectional shape of the glass fibers having a circular cross section include a true circle and an approximate circle. Examples of the cross-sectional shape of the glass fibers having a non-circular cross-section include a cocoon shape having constriction at the center part in the longer direction of the cross-section, an oval shape having parts that are substantially in parallel to each other at symmetric positions with respect to the gravity center of the cross-section, and an elliptical shape.

The inorganic filler (B) is preferably glass fibers having a circular cross-section and glass fibers having a non-circular cross-section from the standpoint of the molding workability of the polyamide resin composition and the mechanical strength of the molded body of the polyamide resin composition.

In the case where the inorganic fiber (B) is glass fibers having a circular cross-section and glass fibers having a non-circular cross-section, the outer circumferential length of the cross-section of the glass fibers having a non-circular cross-section is 1.05 to 1.8 times the outer circumferential length of the cross-section of the glass fibers having a circular cross-section having the same cross-sectional area as the non-circular cross-section.

In the case where the inorganic fiber (B) is glass fibers having a circular cross-section and glass fibers having a non-circular cross-section, the content ratio thereof is not particularly limited, and the mass ratio (glass fibers having circular cross-section)/(glass fibers having non-circular cross-section) is preferably 20/80 to 80/20, more preferably 30/70 to 60/40, and further preferably 30/70 to 50/50.

The average fiber length of the glass fibers is preferably 1.0 to 10 mm, more preferably 1.0 to 7.0 mm, and further preferably 2.0 to 4.0 mm.

The average fiber diameter of the glass fibers is preferably 6 to 20 μm, more preferably 7 to 16 μm, and further preferably 8 to 14 μm, from the standpoint of the flame retardancy, the mechanical strength, and the appearance of the molded body of the polyamide resin composition.

The average fiber length and the average fiber diameter of the glass fibers each may be measured in such a manner that 400 glass fiber arbitrarily selected are measured for the fiber length and the fiber diameter through image analysis with an electron microscope, and the weight average values thereof are designated thereto respectively.

The polyamide resin composition contains 45 to 120 parts by mass of the inorganic filler (B) per 100 parts by mass of the polyamide (A). In the case where the content of the inorganic filler (B) is 45 parts by mass or more, the molded body of the polyamide resin composition can have a sufficient strength, and can provide a strength withstanding the practical use, such as a connector. In the case where the content thereof is 120 parts by mass or less, the polyamide resin composition can have good flowability, and thus is excellent in molding workability and also excellent in productivity of the compound. The content of the inorganic filler (B) is preferably 48 parts by mass or more, and more preferably 50 parts by mass or more. The content of the inorganic filler (B) is preferably 100 parts by mass or less, and more preferably 80 parts by mass or less.

[Phosphinate Salt (C)]

The polyamide resin composition can be a halogen-free polyamide resin composition capable of providing a molded body excellent in flame retardancy, by containing 25 to 40 parts by mass of the phosphinate salt (C) per 100 parts by mass of the polyamide (A).

The phosphinate salt (C) is at least one kind represented by the following formula (I) or the following formula (II). Accordingly, the phosphinate salt (C) is a phosphinate salt represented by the following formula (I), a diphosphinate salt represented by the following formula (II), or a mixture thereof.

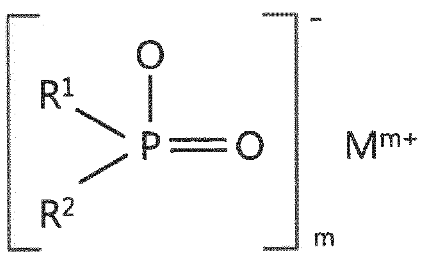

(I)

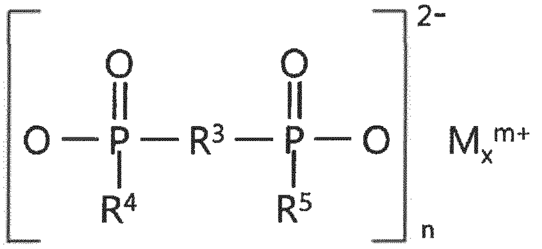

(II)

In the formula (I) and the formula (II), $R^1$, $R^2$, $R^4$, and $R^5$ each independently represent a linear or branched alkyl group having 1 to 16 carbon atoms. In particular, an alkyl group having 1 to 8 carbon atoms is preferred, a methyl group, an ethyl group, a n-propyl group, an isopropyl group, a n-butyl group, a tert-butyl group, a n-pentyl group, and a n-octyl group are more preferred, and an ethyl group is further preferred. $R^1$ and $R^2$, and $R^4$ and $R^5$ each may be bonded to each other to form a ring.

$R^3$ represents a linear or branched alkylene group having 1 to 10 carbon atoms, an arylene group having 6 to 10 carbon atoms, an alkylarylene group having 7 to 20 carbon atoms, a cycloalkylene group having 3 to 10 carbon atoms, an aralkylene group having 7 to 10 carbon atoms, or an arylalkylene group having 7 to 20 carbon atoms.

Examples of the linear or branched alkylene group having 1 to 10 carbon atoms include a methylene group, an ethylene group, a n-propylene group, an isopropylene group, an isopropylidene group, n-butylene, a tert-butylene group, a n-pentylene group, and an n-octylene group.

Examples of the arylene group having 6 to 10 carbon atoms include a phenylene group and a naphthylene group.

Examples of the alkylarylene group having 7 to 10 carbon atoms include a methylphenylene group, an ethylphenylene group, a tert-butylphenylene group, a methylnaphthylene group, an ethylnaphthylene group, and a tertbutylnaphthylene group.

Examples of the cycloalkylene group having 3 to 10 carbon atoms include a cyclohexylene group and a cyclohexanedimethylene group.

Examples of the aralkylene group having 7 to 10 carbon atoms include a phenylenemethylene group, a phenyleneethylene group, and a xylylene group.

Examples of the arylalkylene group having 7 to 20 carbon atoms include a phenylmethylene group, a phenylethylene group, a phenylpropylene group, and a phenylbutylene group.

M represents calcium, aluminum, magnesium, or zinc, in which aluminum and zinc are preferred, and aluminum is more preferred.

m represents an integer of 1 to 4. n represents an integer of 1 to 4. x represents an integer of 1 to 4. In the formula (II), m, x, and n satisfy a relational expression mx = 2n (i.e., the product of m and x is equal to the product of 2 and n).

Examples of the phosphinic acid constituting the phosphinate salt (C) include dimethylphosphinic acid, ethylmethylphosphinic acid, diethylphosphinic acid, methyl-n-propylphosphinic acid, isobutylmethylphosphinic acid, octylmethylphosphinic acid, methylphenylphosphinic acid, and diphenylphosphinic acid, and among these, diethylphosphinic acid is preferred.

Specific examples of the phosphinate salt represented by the formula (I) include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

Examples of the diphosphinic acid constituting the diphosphinate salt include methanedi(methylphosphinic acid) and benzene-1,4-di(methylphosphinic acid).

Specific examples of the diphosphinate salt represented by the formula (II) include calcium methanedi(methylphosphinate), magnesium methanedi(methylphosphinate), aluminum methanedi(methylphosphinate), zinc methanedi(methylphosphinate), calcium benzene-1,4-di(methylphosphinate), magnesium benzene-1,4-di(methylphosphinate), aluminum benzene-1,4-di(methylphosphinate), and zinc benzene-1,4-di(methylphosphinate).

One kind of the phosphinate salt (C) may be used alone, or multiple kinds thereof may be used in combination.

The phosphinate salt (C) is preferably aluminum diethylphosphinate, zinc diethylphosphinate, aluminum methanedi(methylphosphinate), or zinc methanedi(methylphosphinate) from the standpoint of the further excellent flame retardancy. Among these, aluminum diethylphosphinate is more preferred.

The number average particle diameter of the phosphinate salt (C) is preferably 100 μm or less, more preferably 50 um or less, and further preferably 40 μm or less, from the standpoint of the flame retardancy, the mechanical strength,

and the appearance of the molded body of the polyamide resin composition. The lower limit of the number average particle diameter is preferably 1 um or more, more preferably 5 μm or more, and further preferably 10 μm or more. The use of the powder having a number average particle diameter within the range not only exhibits higher flame retardancy, but also further enhances the mechanical strength of the resulting molded body.

The number average particle diameter is a particle diameter value at a cumulative weight of 50% in the measurement of the particle diameter distribution with a particle size distribution measurement device of a laser scattering particle size distribution analyzer.

The polyamide resin composition contains 25 to 40 parts by mass of the phosphinate salt (C) per 100 parts by mass of the polyamide (A). In the case where the content of the phosphinate salt (C) is 25 parts by mass or more, the molded body of the polyamide resin composition has excellent flame retardancy. In the case where the content thereof is 40 parts by mass or less, the polyamide resin composition is excellent in molding workability, and the molded body of the polyamide resin composition is excellent in mechanical strength. The content of the phosphinate salt (C) is preferably 26 parts by mass or more, and more preferably 27 parts by mass or more. The content of the phosphinate salt (C) is preferably 38 parts by mass or less, and more preferably 35 parts by mass or less.

[Phosphite Salt (D)]

The polyamide resin composition contains 2 to 15 parts by mass of the phosphite salt (D) per 100 parts by mass of the polyamide (A), thereby exhibiting excellent flame retardancy, and furthermore, the melt kneading and the molding work of the polyamide resin composition can be favorably performed.

The phosphite salt (D) is not particularly limited, and examples thereof include sodium phosphite, potassium phosphite, calcium phosphite, zinc phosphite, ammonium phosphite, aluminum phosphite, and aluminum hydrogen phosphite. Aluminum phosphite and aluminum hydrogen phosphite are preferred from the standpoint of the exhibition of the further excellent flame retardancy. One kind of the phosphite salt (D) may be used alone, or multiple kinds thereof may be used in combination.

The polyamide resin composition contains 2 to 15 parts by mass of the phosphite salt (D) per 100 parts by mass of the polyamide (A). In the case where the content of the phosphite salt (D) is 2 parts by mass or more, the molded body of the polyamide resin composition has excellent flame retardancy. In the case where the content thereof is 15 parts by mass or less, the polyamide resin composition is excellent in molding workability, and the molded body of the polyamide resin composition is excellent in mechanical strength. The content of the phosphite salt (D) is preferably 2.5 parts by mass or more, and more preferably 3 parts by mass or more. The content of the phosphite salt (D) is preferably 13 parts by mass or less, and more preferably 10 parts by mass or less.

In the polyamide resin composition, the total content of the phosphinate salt (C) and the phosphite salt (D) is preferably 16 to 25% by mass based on 100% by mass of the polyamide resin composition. In the case where the total content of the phosphinate salt (C) and the phosphite salt (D) is 16% by mass or more, the molded body of the polyamide resin composition has excellent flame retardancy. In the case where the total content thereof is 25% by mass or less, the polyamide resin composition is excellent in molding workability, and the molded body of the polyamide resin composition is excellent in mechanical strength. The total content is preferably 16.5% by mass or more, and more preferably 17% by mass or more. The total content is preferably 23% by mass or less, and more preferably 22.5% by mass or less.

In the polyamide resin composition, the mass ratio (C)/(D) of the phosphinate salt (C) to the phosphite salt (D) is preferably 70/30 to 94/6. In the case where the mass ratio is in the range, the molded body of the polyamide resin composition has excellent flame retardancy. The mass ratio is preferably 75/25 to 93/7, and more preferably 80/20 to 92/8.

[Colorant (E)]

The addition of the colorant (E) to the polyamide resin composition can exhibit various colors and can impart visibility and decorativeness thereto. The colorant (E) is not particularly limited, and examples thereof include an organic colorant, such as an organic dye and an organic pigment, and an inorganic colorant, such as an inorganic pigment. The colorant (E) does not encompass carbon black.

In one embodiment of the present invention, the colorant (E) contains an organic colorant. The colorant (E) may be an organic colorant.

In another embodiment of the present invention, the colorant (E) contains an inorganic colorant. The colorant (E) may be an inorganic colorant.

Examples of the organic dye include an anthraquinone dye, a perinone dye, an anthrapyridone dye, a methine dye, an azine dye, an azo dye, an azomethine dye, a phthalocyanine dye, a quinoneimine dye, a quinoline dye, a nitro dye, an indigo dye, and an oxazine dye.

Among these, an anthraquinone dye, a perinone dye, an anthrapyridone dye, and a phthalocyanine dye are preferred, and an anthraquinone dye, a perinone dye, and an anthrapyridone dye are more preferred, from the standpoint

of the heat resistance capable of withstanding the reflow process, the colorability, and the compatibility.

Specific examples of the anthraquinone dye include Solvent Red 169, Solvent Red 172, Solvent Orange 63, Solvent Blue 101, Solvent Blue 102, and Solvent Yellow 98.

Specific examples of the perinone dye include Solvent Red 179.

Specific examples of the anthrapyridone dye include Solvent Red 52.

Specific examples of the azine dye include a nigrosine compound, such as Solvent Black 5.

Specific examples of the phthalocyanine dye include Solvent Blue 38.

Among these, Solvent Red 52, Solvent Red 169, Solvent Red 172, Solvent Red 179, and Solvent Blue 101 are preferred, and Solvent Red 52 and Solvent Red 179 are more preferred, from the standpoint of the flame retardancy of the molded body of the polyamide resin composition.

Examples of the organic pigment include an azo pigment, such as an azo lake pigment, an insoluble monoazo pigment, an insoluble disazo pigment, and an chelate azo pigment, a phthalocyanine pigment, a perylene pigment, a perinone pigment, an anthraquinone pigment, a quinacridone pigment, a dioxazine pigment, a thioindigo pigment, an isoindolinone pigment, a quinophthalone pigment, a diketopyrrolopyrrole pigment, a benzimidazolone pigment, and a threne pigment.

Among these an azo pigment and a phthalocyanine pigment are preferred, and a phthalocyanine pigment is more preferred, from the standpoint of the heat resistance capable of withstanding the reflow process, the colorability, and the compatibility.

Specific examples of the phthalocyanine pigment include Pigment Blue 15, and Pigment Blue 15 is preferred from the standpoint of the flame retardancy of the molded body of the polyamide resin composition.

The content of the organic colorant in the colorant (E) is preferably 0.01 to 100% by mass, and more preferably 1 to 100% by mass, from the standpoint of the achievement of the polyamide resin composition excellent in visibility.

Examples of the inorganic pigment include a metal oxide, such as titanium oxide (e.g., TiO, $Ti_2O_3$, and $TiO_2$), zinc oxide ($Pb_3O_4$), iron oxide ($Fe_2O_3$), antimony oxide, and zirconium oxide, ultramarine (Pigment Blue 29), zinc sulfide, zinc phosphate, barium sulfate, manganese phosphate, cobalt aluminate, cobalt stannate, cobalt zincate, antimony oxide, antimony sulfide, cerium sulfide, lanthanum sulfide, chromium oxide, zinc chromate, and a composite metal oxide containing plural oxides including nickel series, bismuth series, vanadium series, molybdenum series, cadmium series, titanium series, zinc series, manganese series, cobalt series, iron series, chromium series, antimony series, magnesium series, aluminum series, and the like. Specific examples of the composite metal oxide include Pigment Yellow 53, Pigment Green 50, Pigment Brown 24, Pigment Blue 28, and Pigment Blue 36.

Among these, a metal oxide and a composite metal oxide are preferred, and from the standpoint of the flame retardancy of the molded body of the polyamide resin composition, titanium oxide (e.g., TiO, $Ti_2O_3$, and $TiO_2$), iron oxide ($Fe_2O_3$), Pigment Yellow 53, Pigment Green 50, and Pigment Brown 24 are more preferred.

The content of the inorganic colorant in the colorant (E) is preferably 20 to 100% by mass, more preferably 30 to 100% by mass, and further preferably 50 to 100% by mass, from the standpoint of the achievement of the polyamide resin composition excellent in visibility.

One kind of the colorant (E) may be used alone, or multiple kinds thereof may be used in combination, and the colorant (E) preferably contains the organic colorant and the inorganic colorant from the standpoint of the achievement of the polyamide resin compositions having a wide variety of colors. In the case where the colorant (E) contains the organic colorant and the inorganic colorant, the weight ratio of the organic colorant and the inorganic colorant is preferably 1/1 to 1/30, and more preferably 1/1 to 1/15.

The colorant (E) may be used in any form of powder, liquid, and masterbatch. Wax may be added thereto or kneaded therewith in advance for the enhancement of the dispersibility.

The content of the colorant (E) is preferably 0.001 to 5.0% by mass, and more preferably 0.01 to 3.0% by mass, for the organic colorant, and is preferably 0.01 to 5.0% by mass, and more preferably 0.05 to 5.0% by mass, for the inorganic colorant, all based on 100% by mass of the polyamide resin composition, from the standpoint of the flame retardancy, the colorability, and the mechanical strength of the molded body of the polyamide resin composition.

[Additional Components]

The polyamide resin composition may contain additional components, such as a resin other than the polyamide (A), an antioxidant, and a release agent, in such a range that does not impair the effects of the present invention.

Examples of the resin other than the polyamide (A) include a polycarbonate; a modified polyphenylene ether; a polyphenylene oxide; a polyacetal; a polyphenylene sulfide (PPS); a polysulfone; a polyether sulfone; a polysulfone; a polyarylate; a cyclic polyolefin; a polyetherimide; a syndiotactic polystyrene; a brominated polystyrene; a polyamideimide; a polyimide; a liquid crystal polymer, such as an aromatic polyester and an aromatic polyesteramide; a polyaminobismaleimide; and an aromatic polyether ketone, such as a polyether ether ketone and a polyether ketone.

Examples of the antioxidant include a hindered phenol compound, a phosphorus compound, a lactone compound, and a hydroxy compound.

Examples of the release agent include silicone series, fluorine series, longchain alkyl series, and fatty acid amide series.

The polyamide resin composition may further contain, depending on necessity, additional components, such as a heat stabilizer, a light stabilizer, a styrene-maleic anhydride copolymer (SMA), a lubricant, a nucleating agent, a crystallization retarder, a hydrolysis inhibitor, an antistatic agent, a radical inhibitor, a matting agent, an ultraviolet ray absorbent, a dripping inhibitor, and a sliding property imparting agent.

The content of the additional components in the polyamide resin composition may be in such a range that does not impair the effects of the present invention, and is preferably 10% by mass or less, and more preferably 5% by mass or less, from the standpoint of the flame retardancy of the molded body of the polyamide resin composition.

[Sulfur Element Content]

The sulfur element content of the polyamide resin composition of the present invention is less than 220 ppm by mass. The sulfur element content of the polyamide resin composition is preferably less than 210 ppm by mass, and more preferably less than 200 ppm by mass, from the standpoint of the flame retardancy of the molded body of the polyamide resin composition. The sulfur element content is preferably 20 ppm by mass or more, more preferably 50 ppm by mass or more, and further preferably 70 ppm by mass or more, from the standpoint of the easiness in production.

The total of the contents of the polyamide (A), the inorganic filler (B), the phosphinate salt (C), the phosphite salt (D), and the colorant (E) is preferably 90 to 99.9% by mass, more preferably 95 to 99.9% by mass, and further preferably 95 to 99.7% by mass, based on 100% by mass of the polyamide resin composition. The total of the contents within the range is preferred for the polyamide resin composition capable of providing a molded body that is further excellent in flame retardancy.

The strength of the polyamide resin composition is preferably 80 MPa or more, more preferably 90 MPa or more, and further preferably 100 MPa or more, in terms of tensile breaking strength in a tensile test according to ISO 527, in consideration of the application to connectors and structural components of automobiles and electric and electronic components.

The polyamide resin composition of the present invention has ΔE represented by the following expression (1) of more than 1, and with ΔE of more than 1, excellent visibility can be obtained. The polyamide resin composition of the present invention may contain the inorganic filler (B) and the colorant (E) in such a manner that this requirement is satisfied.

$$\Delta E = [(L^*_{col} - L^*_{nat})^2 + (a^*_{col} - a^*_{nat})^2 + (b^*_{col} - b^*_{nat})^2]^{1/2} \quad (1)$$

In the expression (1), ΔE represents a color difference defined by the CIE 1976 (L*a*b*) color system.

$L^*_{col}$, $a^*_{col}$, and $b^*_{col}$ represent L*, a*, and b* defined by the CIE 1976 (L*a*b*) color system of the polyamide resin composition of the present invention, respectively. In other words, L* defined by the CIE 1976 (L*a*b*) color system of the polyamide resin composition of the present invention is $L^*_{col}$, a* thereof is $a^*_{col}$, and b* thereof is $b^*_{col}$.

$L^*_{nat}$, $a^*_{nat}$, and $b^*_{nat}$ represent L*, a*, and b* defined by the CIE 1976 (L*a*b*) color system of a colorant-free polyamide resin composition having the same composition as the polyamide resin composition except that the colorant (E) is not contained, respectively. In other words, L* defined by the CIE 1976 (L*a*b*) color system of the colorant-free polyamide resin composition having the same composition as the polyamide resin composition except that the colorant (E) is not contained is $L^*_{nat}$, a* thereof is $a^*_{nat}$, and b* thereof is $b^*_{nat}$.

In the polyamide resin composition of the present invention, ΔE represented by the expression (1) is preferably more than 3, more preferably more than 10, and further preferably more than 30, from the standpoint of the enhancement of the visibility.

[Production Method of Polyamide Resin Composition]

The production method of the polyamide resin composition is not particularly limited, and a known method may be used. For example, a mixture obtained by dry-blending the polyamide (A), the inorganic filler (B), the phosphinate salt (C), and the phosphite salt (D), the colorant (E), and the additional components mixed depending on necessity in such a manner that the resulting polyamide resin composition contains, per 100 parts by mass of the polyamide (A) having a melting point of 280°C or more, 45 to 120 parts by mass of an inorganic filler (B), 25 to 40 parts of at least one kind of a phosphinate salt (C) represented by the formula (I) or the formula (II), 2 to 15 parts by mass of a phosphite salt (D), and a colorant (E), and has a sulfur element content of less than 220 ppm by mass and ΔE represented by the following expression (1) of more than 1 is melt-kneaded to produce the polyamide resin composition.

The method of melt-kneading is not particularly limited, and a method capable of mixing the components uniformly is preferably used. For example, a single screw extruder, a twin screw extruder, a kneader, a Banbury mixer, and the like are preferred, and a twin screw extruder is preferred from the standpoint of the favorable dispersion of the flame retardant and the colorant and the industrial productivity.

<Molded Body>

After producing the polyamide resin composition, for example, a pelletized product thereof is subjected to various molding methods to provide a molded body. The molding method of the molded body may be appropriately selected depending on the applications, and such a method as injection molding, extrusion molding, hollow molding, compression molding, press molding, calender molding, and the like may be used.
In particular, the polyamide resin composition of the present embodiment can withstand the reflow process, and furthermore can provide a molded body excellent in flame retardancy, and therefore the polyamide resin composition is favorable as an injection molded body used for applications including a surface mount process.

<Applications>

The polyamide resin composition of the present embodiment has heat resistance capable of withstanding the reflow process, and can provide a molded body excellent in flame retardancy, and therefore is useful for external connecting terminals, such as an FPC connector, a B-to-B connector, a card connector, an SMT connector, a coaxial connector, and a memory card connector; an SMT relay; an SMT bobbin; sockets, such as a memory socket and a CPU socket; switches, such as a command switch and an SMT switch; sensors, such as a rotation sensor and an acceleration sensor; and automobile components, such as an IGBT module member for an inverter, an ECU chassis, an insulator, an automobile connector, an engine mount, an intercooler, and a bearing retainer, and among these, useful as an SMT connector, an SMT relay, and an IGBT module member for automobile and electronic equipment, and particularly useful as an SMT connector.
The molded body obtained from the polyamide resin composition of the present embodiment exhibits excellent flame retardancy, and therefore can be favorably applied to an SMT connector or an SMT relay.
Examples of the electronic equipment including the molded body obtained from the polyamide resin composition of the present embodiment include portable electronic equipment, such as a smartphone and a personal computer, and automobiles, but are not limited thereto.

Examples

The present invention will be described more specifically with reference to Examples and Comparative Examples below, but the present invention is not limited thereto.
The melting points and the glass transition temperatures of the polyamides (A) used in Examples and Comparative Examples were measured according to the following methods.

(Melting Point and Glass Transition Temperature of Polyamide (A))

The melting point of the polyamide (PA9T described later) used as the polyamide (A) was obtained in such a manner that the peak temperature of the melting peak appearing in heating under a nitrogen atmosphere from 30°C to 360°C at a rate of 10°C/min with a differential scanning calorimeter (DSC 7020), produced by Hitachi High-Tech Science Corporation, was designated as the melting point (°C). In the case where there were plural melting peaks, the peak temperature of the melting peak on the higher temperature side was designated as the melting point.
Thereafter, the specimen was completely melted at a temperature higher by 30°C than the melting point for 10 minutes, and then cooled to 40°C at a rate of 10°C/min, followed by retaining at 40°C for 10 minutes. The specimen was again heated to a temperature higher by 30°C than the melting point at a rate of 10°C/min, at which the intermediate point where the DSC curve was changed in a stepwise manner was designated as the glass transition temperature.

[Examples 1 to 9 and Comparative Examples 1 to 5]

The polyamide (A) and the additional components (i.e., the antioxidant 1, the antioxidant 2, the release agent, and a lubricant) in the mixing amounts shown in Table 1 were fed to a twin screw extruder (screw diameter: 32 mm, LID = 30, rotation number: 150 rpm, ejection amount: 10 kg/h), produced by Plastics Technology Co., Ltd., through the hopper on the most upstream side, and the inorganic filler (B), the phosphinate salt (C), the phosphite salt (D), and the colorant (E) in the mixing amounts shown in Table 1 were fed thereto through the side feeder, followed by melt-kneading.

The polyamide resin composition thus melt-kneaded was extruded to a strand form, cooled, and then cut to provide pellets of the polyamide resin composition.

In Table 1, the mixing amounts of the polyamide (A), the inorganic filler (B), the phosphinate salt (C), the phosphite salt (D), and the colorant (E) are all "part by mass".

The resulting pellets were evaluated for a molded body (i.e., the flame retardancy, the mechanical strength, the sulfur content, and the chromatic values) in the following manner. The results are shown in Table 2.

[Flame Retardancy]

The pellets of the polyamide resin composition obtained in each of Examples and Comparative Examples were injection molded into plate test pieces having a width of 12.5 mm and a length of 125 mm (thickness: 0.4 mm, 0.75 mm, or 3.0 mm) with an injection molding machine, UH-1000, produced by Nissei Plastic Industrial Co., Ltd., at a maximum cylinder temperature of 320°C, a mold temperature of 140°C, and an injection speed of 750 to 150 mm/s. The test pieces having the aforementioned thicknesses were evaluated for the flame retardancy according to the definition of the UL94 Standard.

<UL94 Standard Flame Retardancy Test>

The upper end of the test piece was held with a clamp to fix the test piece vertically, a prescribed flame is applied to the lower end thereof for 10 seconds and then released therefrom, and the combustion time of the test piece was measured (first test). After extinction, immediately then a flame is again applied to the lower end for 10 seconds and then released therefrom, and the combustion time of the test piece was measured (second test). The same tests were repeated for 5 pieces, and 10 data in total including 5 data for the first combustion time and 5 data for the second combustion time were obtained. The total of the 10 data was designated as T, and the maximum value of the 10 data was designated as M. The case where T was 50 seconds or less, M was 10 seconds or less, the test piece was not burnt up to the clamp, and dried cotton set 12 inches below the test piece was not ignited with a flaming molten material dropping was evaluated as "V-0", the case where T was 250 seconds or less, M was 30 seconds or less, and the other factors were the same as V-0 was evaluated as "V-1", and the case where T was 250 seconds or less, M was 30 seconds or less, the test piece was not burnt up to the clamp, and dried cotton set 12 inches below the test piece was ignited with a flaming molten material dropping was evaluated as "V-2".

[Mechanical Strength]

The pellets of the polyamide resin composition obtained in each of Examples and Comparative Examples were injection molded into a dumbbell specimen (ISO 1A dumbbell) and designated as a test piece with an injection molding machine, UH-1000, produced by Nissei Plastic Industrial Co., Ltd., at a maximum cylinder temperature of 320°C, a mold temperature of 140°C, and an injection speed of 150 to 50 mm/s.

The test piece produced in the aforementioned manner was measured for the tensile breaking strength and the tensile breaking strain at 23°C according to ISO 527 with a tensile tester, Instron 5969 (produced by Instron Japan Co., Ltd.).

[Sulfur Element Content]

The polyamide resin composition obtained in each of Examples and Comparative Examples was measured for the sulfur element content (ppm by mass) with the following equipment under the following condition.

The pellets of the polyamide resin composition obtained in each of Examples and Comparative Examples were spread over an aluminum cup and designated as a specimen for the measurement.

Measurement equipment: Sequential X-ray Fluorescence Spectrometer ZSX Primus p, produced by Rigaku Corporation
X-ray tube: Rhodium 3.0 kW
Analysis diameter: 30 mm
Atmosphere: vacuum
Sample spin: yes
Measurement mode: FP method
Filter: OUT
Thin film for analysis window: 0.7 μm PET
Slit: standard

Dispersive crystal: Ge
Detector: proportional counter

[Chromatic Values (L*a*b*, ΔE)]

L*a*b* as the chromatic values of the polyamide resin composition obtained in each of Examples and Comparative Examples were measured with the apparatus under the condition shown below.
The measured specimen was an ISO 1A dumbbell specimen as a dumbbell type tensile test specimen of the polyamide resin composition obtained in each of Examples and Comparative Examples.

Apparatus: Colorimeter, RAL Colorcatch NANO, produced by RAL gGmbH
Light source: CIE Standard Light Source D65
Sensor: CCD camera (224 × 224 pixels)
Measurement geometry: 45°/0°, Software: RAL iColours (ver. 3.7.2)
Device: Software used on iPhone 8 (iOS 13.3)

ΔE was calculated from the resulting L*a*b* according to the following expression (1).

$$\Delta E = [(L^*_{col}-L^*_{nat})^2+(a^*_{col}-a^*_{nat})^2+(b^*_{col}-b^*_{nat})^2]^{1/2} \quad (1)$$

In the expression (1), $L^*_{col}$, $a^*_{ncol}$, and $b^*_{col}$ represent L*, a*, and b* defined by the CIE 1976 (L*a*b*) color system of the polyamide resin composition obtained in each of Examples, respectively; and $L^*_{nat}$, $a^*_{nat}$, and $b^*_{nat}$ represent L*, a*, and b* defined by the CIE 1976 (L*a*b*) color system of a colorant-free polyamide resin composition having the same composition as the polyamide resin composition except that the colorant (E) is not contained, respectively.
The components shown in Table 1 were as follows.

[Polyamide (A)]

PA9T: "Genestar GC51010" (produced by Kuraray Co., Ltd., PA9T (polyamide including a terephthalic acid unit as the dicarboxylic acid unit, and a 1,9-nonanediamine unit and a 2-methyl-1,8-octanediamine unit as the diamine unit (molar ratio: 85/15)), melting point: 305°C, glass transition temperature: 125°C)

[Inorganic Filler (B)]

Glass fibers: "ECS03T-262H" (produced by Nippon Electric Glass Co., Ltd., cross-sectional shape: circle, 3 mm chopped strands, fiber diameter: 10.5 um)

[Phosphinate Salt (C)]

Aluminum phosphinate: "Exolit OP 1230" (produced by Clariant Chemicals Co., Ltd., aluminum diethylphosphinate, number average particle diameter: 25 μm)

[Phosphite Salt (D)]

Aluminum phosphite: "APA-100" (produced by Taihei Chemical Industrial Co., Ltd.)

[Colorant (E)]

E-1: "Solvent Red 52" (red organic colorant, CAS No. 81-39-0)
E-2: "Solvent Red179" (red organic colorant, CAS No. 6829-22-7)
E-3: "Iron Oxide (III)" (red inorganic colorant, CAS No. 1309-37-1)
E-4: "Pigment Yellow 53" (yellow inorganic colorant, CAS No. 8007-18-9)
E-5: "Pigment Blue 15" (blue organic colorant, CAS No. 147-14-8)
E-6: "Pigment Green50" (green inorganic colorant, CAS No. 68186-85-6)
E-7: "Pigment Brown24" (brown inorganic colorant, CAS No. 68186-90-3)

E-8: "Solvent Yellow98" (yellow organic colorant, CAS No. 27870-92-4)
E-9: "Solvent Orange63" (orange organic colorant, CAS No. 16924-75-0)
E-10: "Ultramarine Blue (Pigment Blue29)" (blue inorganic colorant, CAS No. 57455-37-5)
E-11: "Zinc Sulfide" (white inorganic colorant, CAS No. 1314-98-3)

[Additional Components]

Antioxidant 1: "Irganox 1098" (produced by BASF Japan Ltd.)
Antioxidant 2: "Irgafos 168" (produced by BASF Japan Ltd.)
Release agent: high density polyethylene "HI WAX NP055" (produced by Mitsui Chemicals, Inc.)
Lubricant: calcium stearate "Calcium Stearate S" (produced by NOF Corporation)
Nucleating agent: talc "Micron White #5000S" (produced by Hayashi Kasei Co., Ltd.)

In Table 1, "(C)+(D)" means the total (% by mass) of the contents of the phosphinate salt (C) and the phosphite salt (D) based on 100% by mass of the polyamide resin composition.

In Table 1, "(C)/(D)" means the mass ratio of the phosphinate salt (C) to the phosphite salt (D).

Table 1

| | | | Example | | | | | | | | | Comparative Example | | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 |
| Composition (part by mass) | Polyamide (A) | PA9T | 100.0 | 100.0 | 100.0 | 100.0 | 100.0 | 100.0 | 100.0 | 100.0 | 100.0 | 100.0 | 100.0 | 100.0 | 100.0 | 100.0 |
| | Inorganic filler (B) | Glass fibers | 60.0 | 60.0 | 60.0 | 60.0 | 60.0 | 60.0 | 60.0 | 60.0 | 60.0 | 60.0 | 60.0 | 60.0 | 60.0 | 60.0 |
| | Phosphinate salt (C) | Aluminum phosphinate | 32.8 | 32.8 | 32.8 | 32.8 | 32.8 | 32.8 | 32.8 | 32.8 | 32.8 | 32.8 | 32.8 | 32.8 | 32.8 | 32.8 |
| | Phosphite salt (D) | Aluminum phosphite | 7.2 | 7.2 | 7.2 | 7.2 | 7.2 | 7.2 | 7.2 | 7.2 | 7.2 | 7.2 | 7.2 | 7.2 | 7.2 | 7.2 |
| | Colorant (E) | E-1 | 0.2 | - | - | - | - | - | - | - | - | - | - | - | - | - |
| | | E-2 | - | 0.2 | - | - | - | - | - | - | - | - | - | - | - | - |
| | | E-3 | - | - | 0.2 | - | - | - | - | - | - | - | - | - | - | - |
| | | E-4 < | - | - | - | 0.2 | - | - | - | - | - | - | - | - | - | - |
| | | E-5 | - | - | - | - | 0.2 | 2.0 | - | - | - | - | - | - | - | - |
| | | E-6 | - | - | - | - | - | - | 0.2 | - | - | - | - | - | - | - |
| | | E-7 | - | - | - | - | - | - | - | 0.4 | - | - | - | - | - | - |
| | | E-8 | - | - | - | - | - | - | - | - | 0.1 | - | - | - | 0.4 | - |
| | | E-9 | - | - | - | - | - | - | - | - | - | 0.2 | - | - | - | - |
| | | E-10 | - | - | - | - | - | - | - | - | - | - | 2.0 | - | - | - |
| | | E-11 | - | - | - | - | - | - | - | - | - | - | - | 10.0 | - | - |
| | Additional components | Antioxidant 1 | 0.2 | 0.2 | 0.2 | 0.2 | 0.2 | 0.2 | 0.2 | 0.2 | 0.2 | 0.2 | 0.2 | 0.2 | 0.2 | 0.2 |
| | | Antioxidant 2 | 0.2 | 0.2 | 0.2 | 0.2 | 0.2 | 0.2 | 0.2 | 0.2 | 0.2 | 0.2 | 0.2 | 0.2 | 0.2 | 0.2 |
| | | Release agent | 0.6 | 0.6 | 0.6 | 0.6 | 0.6 | 0.6 | 0.6 | 0.6 | 0.6 | 0.6 | 0.6 | 0.6 | 0.6 | 0.6 |
| | | Lubricant | 0.2 | 0.2 | 0.2 | 0.2 | 0.2 | 0.2 | 0.2 | 0.2 | 0.2 | 0.2 | 0.2 | 0.2 | 0.2 | 0.2 |
| | | Nucleating agent | 0.14 | 0.14 | 0.14 | 0.14 | 0.14 | 0.14 | 0.14 | 0.14 | 0.14 | 0.14 | 0.14 | 0.14 | 0.14 | 0.14 |
| | (C)+(D) | | 40.0 | 40.0 | 40.0 | 40.0 | 40.0 | 40.0 | 40.0 | 40.0 | 40.0 | 40.0 | 40.0 | 40.0 | 40.0 | 40.0 |

(continued)

| | | | Example | | | | | | | | | Comparative Example | | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 |
| | (C)/(D) | | 4.6 | 4.6 | 4.6 | 4.6 | 4.6 | 4.6 | 4.6 | 4.6 | 4.6 | 4.6 | 4.6 | 4.6 | 4.6 | 4.6 |

Table 2

| | | | Example | | | | | | | | | Comparative Example | | | | |
|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 |
| Evaluation | Flame retardancy | UL94V 0.4 mm | V-0 | V-0 | V-0 | V-0 | V-0 | V-0 | V-0 | V-0 | V-0 | V-0 | V-0 | V-0 | V-0 | V-0 |
| | | UL94V 0.75 mm | V-0 | V-0 | V-0 | V-0 | V-0 | V-0 | V-0 | V-0 | V-0 | V-1 | V-1 | V-1 | V-1 | V-0 |
| | Mechanical strength | Tensile breaking strength (MPa) | 112 | 105 | 107 | 117 | 115 | 110 | - | - | 118 | 111 | 106 | 112 | 115 | 113 |
| | | Tensile breaking strain (%) | 1.8 | 1.6 | 1.7 | 1.9 | 1.9 | 1.8 | - | - | 1.9 | 1.8 | 1.6 | 1.8 | 1.7 | 1.9 |
| | Sulfur content (ppm) | | 154 | 152 | 163 | 147 | 176 | 194 | 161 | 154 | 208 | 246 | 1090 | 15600 | 315 | 206 |
| | | L* | 16.7 | 38.2 | 45.5 | 84.4 | 25.8 | 3.4 | 67.4 | 72.8 | 95.4 | 56.0 | 24.5 | 93.3 | 87.2 | 87.1 |
| | | a* | 62.0 | 63.9 | 39.7 | -2.6 | -9.2 | 5.0 | -29.8 | 13.2 | -13.5 | 88.4 | 15.2 | -0.2 | 2.5 | -2.6 |
| | | b* | -16.6 | 63.6 | 32.8 | 24.9 | -55.8 | -46.4 | 11.9 | 48.1 | 128.0 | 54.4 | -66.8 | 3.3 | 128.0 | 7.7 |
| | | ΔE | 99 | 100 | 64 | 17 | 89 | 100 | 34 | 46 | 121 | 107 | 99 | 8 | 120 | - |

As shown in Table 1, it is understood from the comparison of Examples and Comparative Examples that the molded body of the colored polyamide resin composition of the present embodiment is excellent in flame retardancy. It can be said that the polyamide resin composition of the present embodiment uses the polyamide (A) having a melting point of 280°C or more, and thus has heat resistance capable of withstanding the reflow process.

Industrial Applicability

The colored polyamide resin composition of the present embodiment has heat resistance capable of withstanding the reflow process, and can provide a molded body excellent in flame retardancy, and therefore is useful for external connecting terminals, such as an FPC connector, a B-to-B connector, a card connector, an SMT connector, a coaxial connector, and a memory card connector; an SMT relay; an SMT bobbin; sockets, such as a memory socket and a CPU socket; switches, such as a command switch and an SMT switch; sensors, such as a rotation sensor and an acceleration sensor; and automobile components, such as an IGBT module member for an inverter, an ECU chassis, an insulator, an automobile connector, an engine mount, an intercooler, and a bearing retainer.

## Claims

1. A polyamide resin composition comprising, per 100 parts by mass of a polyamide (A) having a melting point of 280°C or more, 45 to 120 parts by mass of an inorganic filler (B), 25 to 40 parts of at least one kind of a phosphinate salt (C) represented by the following formula (I) or the following formula (II), 2 to 15 parts by mass of a phosphite salt (D), and a colorant (E), having a sulfur element content of less than 220 ppm by mass and ΔE represented by the following expression (1) of more than 1:

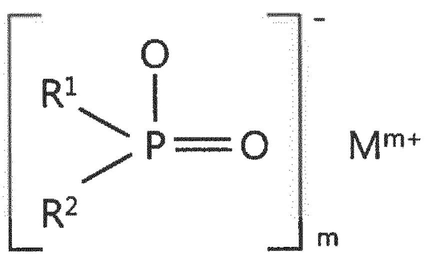

(I)

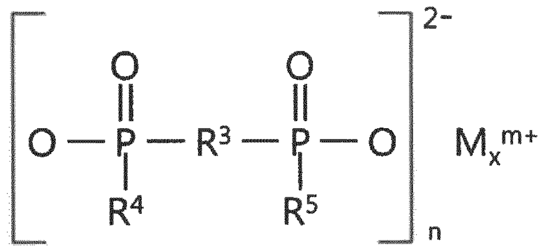

(II)

wherein in the formula (I) and the formula (II), $R^1$, $R^2$, $R^4$, and $R^5$ each independently represent a linear or branched alkyl group having 1 to 16 carbon atoms, in which $R^1$ and $R^2$, and $R^4$ and $R^5$ each may be bonded to each other to form a ring; $R^3$ represents a linear or branched alkylene group having 1 to 10 carbon atoms, an arylene group having 6 to 10 carbon atoms, an alkylarylene group having 7 to 20 carbon atoms, a cycloalkylene group having 3 to 10 carbon atoms, an aralkylene group having 7 to 10 carbon atoms, or an arylalkylene group having 7 to 20 carbon atoms; M represents calcium, magnesium, aluminum, or zinc; m represents an integer of 1 to 4; n represents an integer of 1 to 4; and x represents an integer of 1 to 4, provided that in the formula (II), m, x, and n satisfy a relational expression mx = 2n,

$$\Delta E = [(L^*_{col}-L^*_{nat})^2+(a^*_{col}-a^*_{nat})^2+(b^*_{col}-b^*_{nat})^2]^{1/2} \qquad (1)$$

wherein in the expression (1), ΔE represents a color difference defined by the CIE 1976 (L*a*b*) color system; $L^*_{col}$, $a^*_{col}$, and $b^*_{col}$ represent L*, a*, and b* defined by the CIE 1976 (L*a*b*) color system of the polyamide resin composition, respectively; and $L^*_{nat}$, $a^*_{nat}$, and $b^*_{nat}$ represent L*, a*, and b* defined by the CIE 1976 (L*a*b*) color system of a colorant-free polyamide resin composition having the same composition as the

polyamide resin composition except that the colorant (E) is not contained, respectively.

2. The polyamide resin composition according to claim 1, wherein the colorant (E) contains an organic colorant, and the organic colorant is at least one kind selected from the group consisting of an anthraquinone dye, a perinone dye, an anthrapyridone dye, and a phthalocyanine dye.

3. The polyamide resin composition according to claim 1, wherein the colorant (E) contains an organic colorant, and the organic colorant is a phthalocyanine pigment.

4. The polyamide resin composition according to claim 1, wherein the colorant (E) contains an inorganic colorant, and the inorganic colorant is at least one kind selected from the group consisting of a metal oxide and a composite metal oxide.

5. The polyamide resin composition according to any one of claims 1 to 3, wherein the polyamide resin composition has a content of the organic colorant of 0.001 to 5.0% by mass based on 100% by mass of the polyamide resin composition.

6. The polyamide resin composition according to claim 1 or 4, wherein the polyamide resin composition has a content of the inorganic colorant of 0.01 to 5.0% by mass based on 100% by mass of the polyamide resin composition.

7. The polyamide resin composition according to any one of claims 1 to 6, wherein the phosphite salt (D) is aluminum phosphite or aluminum hydrogen phosphite, and the polyamide resin composition has a total content of the phosphinate salt (C) and the phosphite salt (D) of 16 to 25% by mass based on the polyamide resin composition, and a mass ratio (C)/(D) of the phosphinate salt (C) to the phosphite salt (D) is 70/30 to 94/6.

8. The polyamide resin composition according to any one of claims 1 to 7, wherein the polyamide (A) contains a diamine unit, and 50 to 100% by mol of the diamine unit is an aliphatic diamine unit having 4 to 18 carbon atoms.

9. The polyamide resin composition according to any one of claims 1 to 8, wherein the polyamide (A) contains a dicarboxylic acid unit and a diamine unit, a major component of the dicarboxylic acid unit is a unit derived from terephthalic acid, and a major component of the diamine unit is at least one kind selected from an aliphatic diamine having 4 to 12 carbon atoms.

10. The polyamide resin composition according to any one of claims 1 to 9, wherein the inorganic filler (B) is at least one kind selected from glass fibers having a circular cross-section and glass fibers having a non-circular cross-section.

11. The polyamide resin composition according to any one of claims 1 to 10, wherein the inorganic filler (B) is glass fibers having a circular cross-section and glass fibers having a non-circular cross-section, and an outer circumferential length of the cross-section of the glass fibers having a circular cross-section is 1.05 to 1.8 times an outer circumferential length of the cross-section of the glass fibers having a circular cross-section having the same cross-sectional area as the non-circular cross-section.

12. A method for producing the polyamide resin composition according to any one of claims 1 to 11.

13. A molded body comprising the polyamide resin composition according to any one of claims 1 to 11.

14. The molded body according to claim 13, wherein the molded body is an injection molded body used for applications including a surface mount process.

## INTERNATIONAL SEARCH REPORT

International application No. PCT/JP2021/014922

**A. CLASSIFICATION OF SUBJECT MATTER**

Int. Cl. C08L77/00(2006.01)i, C08K3/013(2018.01)i, C08K5/5313(2006.01)i, C08K7/14(2006.01)i, C08L77/06(2006.01)i
FI: C08L77/00, C08K3/013, C08K5/5313, C08L77/06, C08K7/14

According to International Patent Classification (IPC) or to both national classification and IPC

**B. FIELDS SEARCHED**

Minimum documentation searched (classification system followed by classification symbols)
Int. Cl. C08L77/00, C08K3/013, C08K5/5313, C08K7/14, C08L77/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/076688 A1 (CLARIANT PLASTICS & COATINGS LTD.) 25 April 2019, claims, p. 11, lines 26-28, examples | 1, 7-14 |
| Y | WO 2014/200082 A1 (KURARAY CO., LTD.) 18 December 2014, claims, paragraph [0022], examples | 1, 7-14 |
| A | WO 2019/011788 A1 (CLARIANT PLASTICS & COATINGS LTD.) 17 January 2019, claims, examples | 1-14 |
| A | WO 2019/011789 A1 (CLARIANT PLASTICS & COATINGS LTD.) 17 January 2019, claims, examples | 1-14 |
| A | JP 2006-265539 A (POLYPLASTICS CO., LTD.) 05 October 2006, claims, examples | 1-14 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01.06.2021 | 08.06.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/014922

C (Continuation). DOCUMENTS CONSIDERED TO BE RELEVANT

| Category* | Citation of document, with indication, where appropriate, of the relevant passages | Relevant to claim No. |
|---|---|---|
| A | JP 2010-254760 A (UNITIKA LTD.) 11 November 2010, claims, examples | 1-14 |
| A | JP 2005-089534 A (MITSUBISHI ENGINEERING-PLASTICS CORP.) 07 April 2005, claims, examples | 1-14 |
| A | WO 2020/040282 A1 (KURARAY CO., LTD.) 27 February 2020, claims, examples | 1-14 |
| A | WO 2019/121160 A1 (BASF SE) 27 June 2019, claims, examples | 1-14 |

Form PCT/ISA/210 (continuation of second sheet) (January 2015)

**INTERNATIONAL SEARCH REPORT**
Information on patent family members

International application No.
PCT/JP2021/014922

| Patent Documents referred to in the Report | Publication Date | Patent Family | Publication Date |
|---|---|---|---|
| WO 2019/076688 A1 | 25.04.2019 | CN 111212871 A<br>KR 10-2020-0064147 A | |
| WO 2014/200082 A1 | 18.12.2014 | US 2016/0130422 A1<br>claims, paragraph [0025], examples<br>EP 3009478 A1<br>CN 105283509 A<br>KR 10-2016-0018529 A | |
| WO 2019/011788 A1 | 17.01.2019 | US 2020/0172730 A1<br>claims, examples<br>EP 3652254 A1<br>KR 10-2020-0032141 A<br>CN 109251521 A | |
| WO 2019/011789 A1 | 17.01.2019 | EP 3655475 A1<br>KR 10-2020-0032144 A<br>CN 109251523 A | |
| JP 2006-265539 A | 05.10.2006 | (Family: none) | |
| JP 2010-254760 A | 11.11.2010 | (Family: none) | |
| JP 2005-089534 A | 07.04.2005 | (Family: none) | |
| WO 2020/040282 A1 | 27.02.2020 | (Family: none) | |
| WO 2019/121160 A1 | 27.06.2019 | CN 111448251 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007182550 A
- JP 2007182551 A
- JP 2015120891 A
- JP 2010120983 A
- JP 2014521765 A
- JP 2016186080 A
- JP 7228690 A


### Non-patent literature cited in the description


- *CHEMICAL ABSTRACTS,* 81-39-0
- *CHEMICAL ABSTRACTS,* 6829-22-7
- *CHEMICAL ABSTRACTS,* 1309-37-1
- *CHEMICAL ABSTRACTS,* 8007-18-9
- *CHEMICAL ABSTRACTS,* 147-14-8
- *CHEMICAL ABSTRACTS,* 68186-85-6
- *CHEMICAL ABSTRACTS,* 68186-90-3
- *CHEMICAL ABSTRACTS,* 27870-92-4
- *CHEMICAL ABSTRACTS,* 16924-75-0
- *CHEMICAL ABSTRACTS,* 57455-37-5
- *CHEMICAL ABSTRACTS,* 1314-98-3